(19) Europäisches Patentamt
European Patent Office
Office européen des brevets

(11) Veröffentlichungsnummer: **0 413 258 A1**

(12) # EUROPÄISCHE PATENTANMELDUNG

(21) Anmeldenummer: **90115298.3**

(22) Anmeldetag: **09.08.90**

(51) Int. Cl.5: **C08L 77/00**, //(C08L77/00, 67:02,C08K3:22,5:09)

(30) Priorität: **16.08.89 DE 3926895**

(43) Veröffentlichungstag der Anmeldung: **20.02.91 Patentblatt 91/08**

(84) Benannte Vertragsstaaten: **BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Kopietz, Michael, Dr.**
**Colgensteiner Weg 13**
**D-6718 Gruenstadt(DE)**
Erfinder: **Betz, Walter, Dr.**
**Weimarer Strasse 45**
**D-6700 Ludwigshafen(DE)**
Erfinder: **Blinne, Gerd, Dr.**
**Im Woogtal 7**
**D-6719 Bobenheim(DE)**
Erfinder: **Koch, Eckhard Michael, Dr.**
**Merowingerstrasse 8**
**D-6701 Fussgoenheim(DE)**

(54) **Flammfeste thermoplastische Formmassen auf der Basis von Polyamiden und Polyester-Elastomeren.**

(57) Flammfeste thermoplastische Formmassen, enthaltend als wesentliche Komponenten
A) 40 bis 99,5 Gew.% eines thermoplastischen Polyamids,
B) 0,45 bis 15 Gew.% eines thermoplastischen Polyester-Elastomeren,
C) 0,05 bis 5 Gew.% eines Aluminiumoxids oder eines Aluminiumsalzes einer aliphatischen Carbonsäure mit 6 - 30 C-Atomen oder deren Mischungen
sowie darüber hinaus
D) 0 bis 50 Gew.% faser- oder teilchenförmige Füllstoffe oder deren Mischungen.

EP 0 413 258 A1

Xerox Copy Centre

# FLAMMFESTE THERMOPLASTISCHE FORMMASSEN AUF DER BASIS VON POLYAMIDEN UND POLYESTER-ELASTOMEREN

Die vorliegende Erfindung betrifft flammfeste thermoplastische Formmassen, enthaltend als wesentliche Komponenten

A) 40 bis 99,5 Gew.% eines thermoplastischen Polyamids,

B) 0,45 bis 15 Gew.% eines thermoplastischen Polyester-Elastomeren,

C) 0,05 bis 5 Gew.% eines Aluminiumoxids oder eines Aluminiumsalzes einer aliphatischen Carbonsäure mit 6 - 30 C-Atomen oder deren Mischungen

sowie darüber hinaus

D) 0 bis 50 Gew.% faser- oder teilchenförmige Füllstoffe oder deren Mischungen.

Außerdem betrifft die Erfindung die Verwendung derartiger Formmassen zur Herstellung von Formkörpern sowie die Formkörper, die unter Verwendung dieser Formmassen als wesentliche Komponenten erhältlich sind.

Aus der älteren, nicht vorveröffentlichten europäischen Patentanmeldung 89103149.4 ist bekannt, daß Polyamidformmassen in Abmischung mit bis zu 15 Gew.% Polyester-Elastomeren ein gutes Gesamtspektrum der mechanischen Eigenschaften aufweisen; trotz des Einsatzes des Polyester-Elastomeren weisen die Formkörper dieser Formmassen eine hervorragende Steifigkeit und Schlagzähigkeit bei tiefen Temperaturen sowie Fließfähigkeit auf.

Der Zusatz von Melamincyanurat als Flammschutzmittel zu Formmassen aus Polyamid/Polyesterelastomeren wird in der älteren, nicht vorveröffentlichten Patentanmeldung 3844228.0 vorgeschlagen.

Aus der US-3 080 345 ist der Zusatz von Aluminiumoxiden als Nukleierungsmittel für Polyamide bekannt.

Mechanische Eigenschaften von Formkörpern aus Polyamid/Polyesterelastomeren verschlechtern sich zunehmend mit der Menge des zugegebenen Flammschutzmittels. Um einen ausreichenden Flammschutz dieser Formkörper zu erzielen, sind meist mehrere Additive mit synergystischen Effekten notwendig wie halogenierte Flammschutzmittel mit Synergist Antimontrioxid oder roter Phosphor, der bei glasfaserverstärkten Formmassen vorwiegend eingesetzt wird.

Der vorliegenden Erfindung lag daher die Aufgabe zugrunde, thermoplastische Formmassen, insbesondere unverstärkte Formmassen zur Verfügung zu stellen, die ein gutes Gesamtspektrum der mechanischen Eigenschaften und den für ihre Anwendungszwecke nötigen Flammschutz aufweisen.

Diese Aufgabe wird erfindungsgemäß durch die eingangs definierten thermoplastischen Formmassen gelöst.

Bevorzugte Massen dieser Art und ihre Verwendung sind den Unteransprüchen zu entnehmen.

Als Komponente (A) enthalten die erfindungsgemäßen Formmassen 40 bis 99,5 vorzugsweise 45 bis 99,2 und insbesondere 60 bis 98 Gew.% eines thermoplastischen Polyamids.

Bevorzugt sind aromatische Copolyamide, die als Komponente $\alpha_1$) 40 bis 90 Gew.% eines äquimolaren Gemisches von Terephthalsäure und Hexamethylendiamin enthalten. Ein geringer Anteil der Terephthalsäure, vorzugsweise nicht mehr als 5 Gew.% der gesamt eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die Copolyamide Einheiten, die sich von $\epsilon$-Caprolactam ableiten und/oder Einheiten, die sich von Adipinsäure und Hexamethylendiamin ableiten.

Der Anteil an Einheiten, die sich von $\epsilon$-Caprolactam (Komponente $\alpha_2$)) ableiten, beträgt bis zu 50 Gew.%, vorzugsweise 20 bis 45 Gew.%, insbesondere 25 bis 40 Gew.%, während der Anteil an Einheiten, die sich von Adipinsäure und Hexamethylendiamin (Komponente $\alpha_3$)) ableiten, bis zu 60 Gew.%, vorzugsweise 30 bis 55 Gew.% und insbesondere 35 bis 50 Gew.% beträgt.

Die Copolyamide können auch sowohl Einheiten von $\epsilon$-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.% beträgt, vorzugsweise mindestens 20 Gew.%. Das Verhältnis der Einheiten, die sich von $\epsilon$-Caprolactam und von Adlpinsäure und Hexamethylendiamin ableiten, unterliegt hingegen keiner besonderen Beschränkung.

Als besonders vorteilhaft haben sich Copolyamide aus 50 bis 80, insbesondere 60 bis 75 Gew.% aus der Komponente $\alpha_1$), und 20 bis 50, vorzugsweise 25 bis 40 Gew.% der Komponente $\alpha_2$), erwiesen.

Neben den vorstehend beschriebenen Komponenten $\alpha_1$) bis $\alpha_3$) können die teilaromatischen Copolya-

mide noch untergeordnete Mengen, vorzugsweise nicht mehr als 15 Gew.%, insbesondere nicht mehr als 10 Gew.%, an weiteren Polyamidbausteinen (Komponente $\alpha_4$)) enthalten, wie sie von anderen Polyamiden bekannt sind. Diese Bausteine können sich von Dicarbonsäure mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien Suberinsäure, Azelainsäure, Sebacinsäure oder Isophthalsäure als Dicarbonsäuren und 1,4-Diaminobutan, 1,5-Diaminopentan, Piperazin, 4,4′-Diaminodicyclohexylmethan, 2,2-((4,4′-Diaminodicyclohexyl)propan und 3,3′-Dimethylen-4,4′-diaminodicyclohexylmethan als Diamine und Capryllactam, Önanthlactam, ω-Aminoundecansäure und Laurinlactam als Lactame bzw. Aminocarbonsäuren genannt. Die teilaromatischen Copolyamide sollen einen Triamingehalt (Gehalt an Kondensationsprodukten der Diamine des Typs $H_2N\text{-}R\text{-}NH\text{-}R\text{-}NH_2$) von weniger als 0,5, vorzugsweise weniger als 0,3 Gew.% aufweisen. Diese Bedingung läßt sich in an sich bekannter Weise durch Polykondensation unter schonenden Bedingungen, unter denen eine Selbstkondensation der Diamine praktisch unterbunden wird, einhalten.

Die Herstellung der Polyamide (A) kann nach dem in den EP-A 129 195 und 129 196 beschriebenen Verfahren erfolgen.

Die Schmelzpunkte der teilaromatischen Copolyamide liegen im Bereich von 260° C bis über 300° C, wobei dieser hohe Schmelzpunkt auch mit einer hohen Glasübergangstemperatur von in der Regel mehr als 75, insbesondere mehr als 85° C verbunden ist.

Weiterhin kommen als Komponente A) an sich bekannte Polyamide in Betracht. Diese umfassen die halbkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem Diamin, welches bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden sind.

Bevorzugt werden lineare Polyamide mit einem Schmelzpunkt über 200° C.

Bevorzugte Polyamide sind Polyhexamethylenadipinsäureamid, Polyhexamethylensebacinsäureamid und Polycaprolactam.

Die Polyamide weisen im allgemeinen eine relative Viskosität von 2,5 bis 5 auf, bestimmt an einer 1 gew.%igen Lösung in 96 %iger Schwefelsäure bei 23° C, was einem Molekulargewicht von etwa 15 000 bis 45 000 entspricht. Polyamide mit einer relativen Viskosität von 2,5 bis 3,5, insbesondere 2,6 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Als Komponente B) enthalten die erfindungsgemäßen thermoplastischen Formmassen 0,45 bis 15, insbesondere 0,45 bis 10 und besonders bevorzugt 1 bis 5 Gew.%, bezogen auf das Gesamtgewicht der Formmassen, eines thermoplastischen Polyester-Elastomeren.

Unter Polyester-Elastomeren werden dabei segmentierte Copolyetherester verstanden, die langkettige und kurzkettige Segmente enthalten. Die langkettigen Segmente leiten sich in der Regel von Polyalkylenetherdiolen und die kurzkettigen Segmente von niedermolekularen Diolen und Dicarbonsäuren ab.

Derartige Produkte sind an sich bekannt und in der Literatur beschrieben. Nur beispielsweise sei hier auf die US-Patentschriften 3 651 014, 3 784 520, 4 185 003 und 4 136 090, sowie auf die Veröffentlichungen von G.K. Hoeschele in Chimia 28, (9), 544 (1974), Angew. Makromolek. Chemie 58/59, 299 - 319 (1977) und Pol. Eng. Sci. 1974, 848 verwiesen. Auch im Handel sind entsprechende Produkte unter den Bezeichnungen Hytrel® (DuPont), Arnitel® (Akzo) sowie Pelprene® (Toyobo Co. Ltd.) erhältlich.

Ganz allgemein setzen sich thermoplastische Copolyetherester-Elastomere aus langkettigen Segmenten der allgemeinen Formel

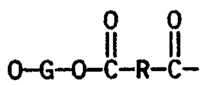

Ia

und kurzkettigen Segmenten der allgemeinen Formel

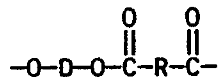

Ib

zusammen,
wobei
G einen zweiwertigen Rest, der nach der Entfernung der terminalen Hydroxylgruppen aus einem Polyalkylenetherdiol mit einem Molekulargewicht von vorzugsweise 400 bis 6000, insbesondere 600 bis 4000 entsteht,
D einen zweiwertigen Rest, der nach Entfernung der terminalen Hydroxylgruppen aus einem niedermolekularen Diol mit einem Molekulargewicht von vorzugsweise weniger als 250 entsteht, und
R einen zweiwertigen Rest, der nach Entfernung der Carboxylgruppen aus einer Dicarbonsäure mit einem Molekulargewicht von vorzugsweise weniger als 300 entsteht,
bedeuten.

Es versteht sich, daß auch Mischungen von mehreren Polyalkylenetherdiolen, mehreren Diolen oder mehreren Dicarbonsäuren eingesetzt werden können.

Die Polyalklyenetherdiole HO-G-OH haben vorzugsweise einen Schmelzpunkt von weniger als 55 °C und ein Kohlenstoff/Sauerstoff-Molverhältnis von vorzugsweise 2 bis 10, insbesondere 2 bis 6.

Beispiele für Polyalkylenetherdiole sind Poly(ethylenoxid)glycol, Poly(1,2-propylenoxid)glycol, Poly(1,3-propylenoxid)glycol, Poly(1,2-butylenoxid)glycol, Poly(1,3-butylenoxid)glycol, Poly(1,4-butylenoxid)glycol, Poly(pentamethylenoxid)glycol, Poly(hexamethylenoxid)glycol, Poly(heptamethylenoxid)glycol, Poly-(octamethylenoxid)glycol, Poly(nonamethylenoxid)glyool sowie statistische oder Blockcopolymere aus verschiedenen der vorstehend genannten Glycole. Bevorzugt werden Poly(ethylenoxid)glycol, Poly(1,2-propylenoxid)glycol, Poly(1,3-propylenoxid)glycol und Poly(1,4-butylenoxid)glycol sowie deren Mischungen. Der Gewichtsanteil der langkettigen Segmente, die sich von den vorstehenden Polyalkylenoxidglykolen und Dicarbonsäuren ableiten, liegt im allgemeinen im Bereich von 5 bis 70 Gew.%, vorzugsweise von 7 bis 50 Gew.%, bezogen auf das Gesamtgewicht der Komponente B.

Als Diole HO-D-OH kommen ganz allgemein niedermolekulare Diole mit Molekulargewichten von vorzugsweise weniger als 250 in Betracht. Diese können lineare oder verzweigte, cycloaliphatische oder aromatische Grundstrukturen aufweisen.

Diole mit 2 bis 15 C-Atomen werden bevorzugt. Beispielhaft seien hier nur 1,2-Ethandiol, 1,3-Propandiol, 1,2-Propandiol, 1,4-Butandiol, 1,3-Butandiol, 1,2-Butandiol, 1,5-Pentandiol, 2,2-Dimethyl-1,3-propandiol, 1,6-Hexandiol sowie dessen Isomere, Decamethylendiol, die isomeren Dihydroxycyclohexane, Resorcin, Hydrochinon und die verschiedenen Dihydroxynaphthaline genannt. Besonders bevorzugt werden aliphatische Diole mit 2 bis 8, insbesondere 2 bis 4 C-Atomen, wie 1,2-Ethandiol, 1,3-Propandiol und 1,4-Butandiol.

Auch ungesättigte Diole haben sich in einigen Fällen als geeignet herausgestellt, z.B. But-2-en-1,4-diol, insbesondere in Mischung mit den vorstehend genannten gesättigten Diolen. Beispiele für Polyetherester aus derartigen Mischungen sind der EP-A 49 823 zu entnehmen.

Weiterhin eignen sich als Diole auch noch Diphenole wie 4,4-Dihydroxydiphenyl, Di-(4-hydroxyphenyl)-methan und 2,2-Di-(4-hydroxyphenyl)propan (häufig als Bisphenol A bezeichnet).

Selbstverständlich können anstelle der Diole auch deren esterbildende Derivate eingesetzt werden, beispielsweise die Ester leichtflüchtiger Carbonsäuren.

Die Dicarbonsäuren der Struktureinheit HOOC-R-COOH weisen vorzugsweise Molekulargewichte von weniger als 300 und können aromatisch, aliphatisch oder cycloaliphatisch sein. Die Dicarbonsäuren können auch Substituenten aufweisen, die im Verlauf der Polymerisationsreaktion nicht stören.

Als Beispiele für aromatische Dicarbonsäuren seien Terephthalsäure, Isophthalsäure, substituierte Dicarbonsäuren der allgemeinen Formel

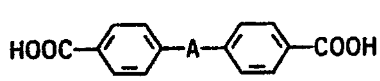

wobei A eine chem. Bindung, eine Alkylengruppe mit 1,3- C-Atomen, -CO-, -S- oder $-SO_2-$ ist, 1,5-, 2,6- und 2,7-Naphthalindicarbonsäure und deren $C_1$-$C_6$-alkylsubstituierten Derivate genannt. Von diesen werden Terephthalsäure, Isophthalsäure, deren Mischungen oder Mischungen aus Tere- oder Isophthalsäure mit anderen Dicarbonsäuren bevorzugt.

Aliphatische Dicarbonsäuren, die eingesetzt werden können sind beispielsweise Oxalsäure, Fumarsäure, Maleinsäure, Citraconsäure, Sebacinsäure, Adipinsäure, Glutarsäure, Succinsäure und Azelainsäure.

Selbstverständlich können auch Mischungen verschiedener aliphat. Dicarbonsäuren eingesetzt werden. Wie im Fall der Diole können anstelle der Säuren selbst auch deren esterbildende Derivate eingesetzt werden. Dies hat sich in einigen Fällen auch als besonders vorteilhaft herausgestellt.

Wegen weiterer langkettiger Glykole HO-G-OH, kurzkettiger Diole HO-D-OH und Dicarbonsäuren HOOC-R-COOH sei auf die US-A 3 651 014 verwiesen.

Wie bereits vorstehend erwähnt, beträgt der Anteil der langkettigen Segmente im allgemeinen 5 bis 70 Gew.%, vorzugsweise 7 bis 50 Gew.% und der Anteil der kurzkettigen Segmente entsprechend 30 bis 95 Gew.%, vorzugsweise 50 bis 93 Gew.%. Der Gewichtsanteil der jew. Segmente beeinflußt unter anderem die Härte der Produkte.

Die Dicarbonsäuren in der langkettigen und kurzkettigen Segmenten können dabei gleich oder verschieden sein; ebenso können auch bei der Herstellung der langkettigen bzw. kurzkettigen Segmente Mischungen von Diolen oder Dicarbonsäuren eingesetzt werden.

Die vorstehenden Ausführungen zeigen, daß eine Vielzahl verschiedener segmentierter Copolyetherester als Komponente B) eingesetzt werden kann. Von diesen werden Copolyetherester, deren langkettige Einheiten sich von Poly(1,4-alkylenoxid)glycol mit einem Molekulargewicht von 600 bis 2000, Terephthalsäure und 1,4-Butandiol ableiten, bevorzugt.

In einigen Fällen hat es sich als vorteilhaft erwiesen, einen Teil der Terephthalsäure durch Isophthalsäure, Adipinsäure oder Sebacinsäure oder einen Teil des 1,4-Butandiols durch andere Diole, z.B. 1,3-Propandiol, 1,5-Pentandiol oder But-2-en-1,4-diol zu ersetzen. Derartige Produkte werden in der US-A 3 651 014 und der EP-A 49 823 beschrieben.

Verfahren zur Herstellung segmentierter Copolyetherester sind an sich bekannt und in der Literatur beschrieben, so daß sich hier nähere Angaben erübrigen. Hier sei nur auf US-A 3 651 014, US-A 3 784 520 und einen übersichtsartikel von G.K. Hoeschele (Chimia 28, 544 (1974) verwiesen.

Die Copolyetherester B) können zur Stabilisierung gegen thermischen oder oxidativen Abbau Stabilisatoren enthalten, wie dies beispielsweise in den US-A 4 136 090 und 4 185 003 sowie einem Artikel von G.K. Hoeschele (Angew. Makromolekulare Chemie 58/59, 299 - 319 (1977) zu entnehmen ist.

Als Komponente C) enthalten die erfindungsgemäßen Formmassen 0,05 bis 5, bevorzugt 0,2 - 3 und insbesondere 0,3 bis 0,7 Gew.% eines Aluminiumoxides oder eines Aluminiumsalzes einer aliphatischen Carbonsäure mit 6 - 30 C-Atomen oder deren Mischungen als Flammschutzmittel.

Das gemäß der Erfindung (Komponente C) verwendete Aluminiumoxid weist im allgemeinen zwei verschiedene wasserfreie Modifikationen auf: $\alpha$-$Al_2O_3$ und $\gamma$-$Al_2O_3$.

$\alpha$-$Al_2O_3$ ist bei hohen Temperaturen stabil und bei niederen unbegrenzt metastabil. Es tritt in der Natur in Form des Minerals Korund auf und kann aus $\gamma$-$Al_2O_3$ oder jedem wasserhaltigen Oxid durch Erhitzen auf mehr als 1000 °C dargestellt werden. $\gamma$-$Al_2O_3$ wird durch Entwässern wasserhaltiger Oxide bei niederen Temperaturen (~ 450 °C) gewonnen. $\alpha$-$Al_2O_3$ ist sehr hart und widerstandsfähig gegen Hydrationen und Angriff durch Säuren, während $\gamma$-$Al_2O_3$ bereitwillig Wasser aufnimmt und sich in Säuren löst.

Es gibt mehrere hydratisierte Formen der Tonerde, die den Stöchiometrien AlO•OH und $Al(OH)_3$ entsprechen. Zugabe von Ammoniak zu einer Aluminiumsalzlösung ergibt eine Form des AlO•OH, die als Böhmit bekannt ist, die jedoch auch auf anderen Wegen zugänglich ist. Eine zweite Form des AlO•OH tritt in der Natur als Mineral Diaspor auf. $Al(OH)_3$ erhält man als weißen Niederschlag, wenn man Kohlendioxid in alkalische "Aluminat"-Lösungen einleitet.

Bevorzugt wird $\gamma$-$Al_2O_3$ als Flammschutzmittel eingesetzt. Das im Handel erhältliche Produkt ist ein weißes Pulver mit einer Dichte von 3,5 bis 3,9 $g/cm^3$.

Erfindungsgemäß kann der Anteil des Aluminiumoxids bis zu 70 Gew.%, bevorzugt bis zu 40 Gew.-% durch andere Metalloxide z.B. Magnesiumoxid ersetzt werden.

Alternativ oder in Mischung mit Aluminiumoxid sind erfindungsgemäß Aluminiumsalze von aliphatischen Carbonsäuren mit 6 - 30, bevorzugt 10 - 24 und insbesondere 12 - 22 C-Atomen als Flammschutzmittel C) verwendbar.

Bevorzugt sind Aluminiumsalze der Laurin-, Myristin-, Palmitin- und besonders bevorzugt Stearinsäure wie Aluminiumtristearat und Aluminiumdistearat.

Das im Handel erhältliche Aluminiumtristearat ist ein weißes Pulver mit einem Schmelzpunkt von 110-130 °C.

Neben den Komponenten A), B) und C) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 50 Gew.%, bezogen auf das Gesamtgewicht der Formmassen beträgt.

Die Stabilisatoren können den thermoplastischen Formmassen in jedem Stadium der Herstellung zugesetzt werden, werden jedoch vorzugsweise möglichst früh zugegeben, um zu verhindern, daß die Zersetzung bereits beginnt, bevor der Stabilisator eingearbeitet ist. Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bezogen auf das Gesamtgewicht der Formmassen.

Als Keimbildungsmittel können z.B. Talkum, Calciumfluorid, Natriumphenylphosphinat und feinteiliges Polytetrafluorethylen eingesetzt werden.

Als Beispiele für weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Die Herstellung der erfindungsgemäßen Formmassen kann nach an sich bekannten Verfahren erfolgen, z.B. durch Abmischen in der Schmelze bei erhöhten Temperaturen. Zweckmäßigerweise verwendet man hierzu Extruder, z.B. Einschnecken- oder Zweischneckenextruder oder andere herkömmliche Plastifizierungsvorrichtungen, wie Brabender-Mühlen oder Banbury-Mühlen. Die Herstellung kann aber auch durch gemeinsames Ausfällen der Komponenten aus einer Lösung oder durch Mischen oder Trockenmischen der Komponenten und anschließendes Schmelzstrangpressen des trockenen Gemisches hergestellt werden.

Die erfindungsgemäßen Formmassen eignen sich für die Verarbeitung durch Spritzguß oder Extrusion, insbesondere zur Herstellung von hochbeanspruchten, thermostabilen schlagzähen Formteilen für technische Zwecke aller Art.

Dabei ist vor allem die gute Durchstoßarbeit, verbunden mit einer guten Fließfähigkeit und einer guten Steifigkeit, in Kombination mit einem wirksamen Flammschutz von besonderem Vorteil. Die erfindungsgemäßen Formmassen eignen sich insbesondere für Kabelbinder oder Steckerleisten.

Beispiele

Komponente A1)

Polyhexamethylenadipinsäureamid mit einem K-Wert nach Fikentscher von 70; gemessen in einer 1 gew.%igen Lösung von 96 gew.%iger Schwefelsäure bei 25 °C. Dieser K-Wert entspricht einer relativen Viskosität von 2,5 oder einer Viskositätszahl von 133.

Komponente A2)

Statistisches Copolyamid aus
90 Gew.% Einheiten einer äquimolaren Mischung von Hexamethylendiamin und Adipinsäure und
10 Gew.% Einheiten, die sich von $\epsilon$-Caprolactam ableiten mit einem K-Wert nach Fikentscher von 70.

Komponente B)

Hytrel® 4056 (Copolyetherester, aufgebaut im wesentlichen aus Einheiten, die sich von Poly(1,4-butylenglykol), Terephthalsäure und 1,4-Butandiol ableiten) mit einer Shore-Härte von 92 A bzw. 40 D (nach ASTM D-2240) und einem Schmelzindex von 4 bis 6,5 g/10 min (190 °C, 2,16 kg Belastung).

Komponente C1)

$\gamma$-$Al_2O_3$

Komponente C2)

Aluminiumtristearat (Schmelzpunkt: 110-130 °C).

Die Komponenten A1), B) und C) wurden bei 260 bis 280 °C, die Komponenten A2) B) und C) bei 300 bis 330 °C auf einem Zweischneckenextruder abgemischt und in ein Wasserbad extrudiert. Nach Granulierung und Trocknung wurden auf einer Spritzgußmaschine Prüfkörper gespritzt und geprüft.

Der Brandtest erfolgte nach UL 94 an 1/8, 1/16 und 1/32 Zoll Prüfkörpern mit üblicher Konditionierung.

Die Fließfähigkeit der Formmassen wurde anhand von Testspiralen überprüft. Dazu wurden aus Formmassen, die Komponente A1) enthielten bei einer Massetemperatur von 290 °C, für Komponente A2) bei einer Massetemperatur von 340 °C, eine Testspirale gespritzt. Der Durchmesser der Spirale betrug 2 mm, die Vorschub- bzw. Einspritzgeschwindigkeit der Spritzgußmaschine betrug 100 mm/s. Meßgröße für die Fließfähigkeit der Mischung ist die erhaltene Spirallänge in mm.

Die Zusammensetzung der Formmassen und die Ergebnisse der Messungen sind der Tabelle zu entnehmen.

| Nr. | Zusammensetzung [Gew.%] | | | Brenndauer [s] | 1/8′ | 1/16′ | 1/32′ | Spirallänge [mm] |
|---|---|---|---|---|---|---|---|---|
| 1 | 98 A1) | 1,5 B) | 0,5 C1) | 8 | V2 | V2 | V2 | 104 |
| 2 | 97,5 A1) | 1,5 B) | 1,0 C2) | 6 | V2 | V2 | V2 | 108 |
| 3 | 96 A2) | 3,5 B) | 0,5 C1) | 7 | V2 | V2 | V2 | 78 |
| 4* | 100 A1) | - | - | 26 | HB | HB | HB | 95 |
| 5* | 100 A2) | - | - | 27 | HB | HB | HB | 65 |
| 6* | 99,5 A1) | - | 0,5 C1) | 8 | V2 | V2 | V2 | 100 |
| 7* | 99,5 A2) | - | 0,5 C1) | 6 | V2 | V2 | V2 | 72 |
| 8* | 99,9 A2) | - | 0,1 C1) | 14 | V2 | V2 | V2 | 67 |
| 9* | 98,5 A1) | 1,5 B) | - | 28 | HB | HB | HB | 107 |
| 10* | 96,5 A2) | 3,5 B) | - | 28 | HB | HB | HB | 75 |

*) zum Vergleich

**Ansprüche**

1. Flammfeste thermoplastische Formmassen, enthaltend als wesentliche Komponenten
   A) 40 bis 99,5 Gew.% eines thermoplastischen Polyamids,
   B) 0,45 bis 15 Gew.% eines thermoplastischen Polyester-Elastomeren,
   C) 0,05 bis 5 Gew.% eines Aluminiumoxids oder eines Aluminiumsalzes einer aliphatischen Carbonsäure mit 6 - 30 C-Atomen oder deren Mischungen
   sowie darüber hinaus
   D) 0 bis 50 Gew.% faser- oder teilchenförmige Füllstoffe oder deren Mischungen.
2. Flammfeste thermoplastische Formmassen nach Anspruch 1, enthaltend als wesentliche Komponenten
   A) 45 bis 99,25 Gew.% des thermoplastischen Polyamids,
   B) 0,45 bis 10 Gew.% des thermoplastischen Polyester-Elastomeren und

C) 0,3 bis 0,7 Gew.% eines Aluminiumoxids oder eines Aluminiumsalzes einer aliphatischen Carbonsäure mit 6 - 30 C-Atomen oder deren Mischungen

3. Flammfeste thermoplastische Formmassen nach Anspruch 1, enthaltend

A) 49,2 - 89,2 Gew.%

B) 0,5 - 10 Gew.%

C) 0,3 - 0,7 Gew.%

D) 10 - 50 Gew.%

4. Flammfeste thermoplastische Formmassen nach den Ansprüchen 1 bis 3, in denen die Komponente A) Polyamid-6,6 oder ein teilkristallines, teilaromatisches Copolyamid ist, bestehend aus

$\alpha_1$) 40 bis 90 Gew.% eines äquimolaren Gemisches aus Terephthalsäure und Hexamethylendiamin,

$\alpha_2$) 0 bis 50 Gew.% $\epsilon$-Caprolactam und

$\alpha_3$) 0 bis 60 Gew.% eines äquimolaren Gemisches aus Adipinsäure und Hexamethylendiamin,

$\alpha_4$) 0 bis 15 Gew.% weiteren polyamidbildenden Monomeren, wobei der Anteil der Komponenten $\alpha_2$) und/oder $\alpha_3$) mindestens 10 Gew.% beträgt.

5. Thermoplastische Formmassen nach den Ansprüchen 1 bis 4, dadurch gekennzeichnet, daß die Komponente B) aus Einheiten Ia und Ib

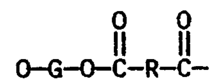

Ia

und

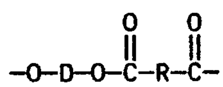

Ib

aufgebaut ist, wobei

G den zweiwertigen Rest eines Polyalkylenetherdiols,

D den zweiwertigen Rest eines Diols, and

R den zweiwertigen Rest einer Dicarbonsäure

bedeuten.

6. Flammfeste thermoplastische Formmassen nach den Ansprüchen 1 bis 5, in denen die Gewichtsanteile der langkettigen Segmente Ia der Komponente B) 5 bis 70 Gew.% und der kurzkettigen Segmente Ib 30 bis 95 Gew.% beträgt.

7. Flammfeste thermoplastische Formmassen nach den Ansprüchen 1 bis 6, in denen die Komponente C) $\gamma$-$Al_2O_3$ oder Aluminiumtristearat oder deren Mischungen ist

8. Verwendung der thermoplastischen Formmassen gemäß den Ansprüchen 1 bis 7 zur Herstellung von Formkörpern.

9. Formkörper, erhältlich aus thermoplastischen Formmassen gemäß den Ansprüchen 1 bis 7 als wesentlichen Komponenten.

Europäisches Patentamt

# EUROPÄISCHER RECHERCHENBERICHT

Nummer der Anmeldung

EP 90 11 5298

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 044 141 (ICI) --- | | C 08 L 77/00 // (C 08 L 77/00 C 08 L 67:02 C 08 K 3:22 C 08 K 5:09 ) |
| A | PATENT ABSTRACTS OF JAPAN, Band 9, Nr. 254 (C-308), 11. Oktober 1985; & JP-A-60 106 854 (MITSUBISHI) 12-06-1985 --- | | |
| A | FR-A-1 214 235 (BAYER) --- | | |
| A | US-A-2 345 700 (H. DREYFUS) --- | | |
| A | US-A-2 484 416 (J.B. MARTIN) ----- | | |
| | | | RECHERCHIERTE SACHGEBIETE (Int. Cl.5) |
| | | | C 08 L<br>C 08 K |

Der vorliegende Recherchenbericht wurde für alle Patentansprüche erstellt

| Recherchenort | Abschlußdatum der Recherche | Prüfer |
|---|---|---|
| DEN HAAG | 19-11-1990 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)